(19) Europäisches Patentamt
European Patent Office
Office européen des brevets

(11) **EP 1 769 603 B1**

(12) **FASCICULE DE BREVET EUROPEEN**

(45) Date de publication et mention
de la délivrance du brevet:
**12.02.2014 Bulletin 2014/07**

(21) Numéro de dépôt: **05788664.0**

(22) Date de dépôt: **08.07.2005**

(51) Int Cl.:
**H04L 9/06** $^{(2006.01)}$

(86) Numéro de dépôt international:
**PCT/FR2005/001773**

(87) Numéro de publication internationale:
**WO 2006/021641 (02.03.2006 Gazette 2006/09)**

(54) **PROCEDE ET DISPOSITIF D'EXECUTION D'UN CALCUL CRYPTOGRAPHIQUE**

VERFAHREN UND VORRICHTUNG ZUR AUSFÜHRUNG EINER KRYPTOGRAFISCHEN BERECHNUNG

METHOD AND DEVICE FOR EXECUTING CRYPTOGRAPHIC CALCULATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.07.2004 FR 0408139**

(43) Date de publication de la demande:
**04.04.2007 Bulletin 2007/14**

(73) Titulaire: **MORPHO**
**92130 Issy Les Moulineaux (FR)**

(72) Inventeur: **PELLETIER, Hervé**
**F-95280 JOUY LE MOUTIER (FR)**

(74) Mandataire: **Cabinet Plasseraud**
**52, rue de la Victoire**
**75440 Paris Cedex 09 (FR)**

(56) Documents cités:
**EP-A- 1 263 163     DE-A- 10 223 175**
**FR-A- 2 831 739     GB-A- 2 345 229**

## Description

La présente invention est relative au domaine de la cryptographie et plus particulièrement à la protection de la confidentialité des clés utilisées par des algorithmes cryptographiques.

Les algorithmes cryptographiques ont pour objectif de crypter des données. De tels algorithmes comprennent généralement un enchaînement de plusieurs opérations, ou calculs, que l'on applique successivement sur une donnée à crypter afin d'obtenir une donnée cryptée. Ces algorithmes utilisent des clés secrètes.

De tels algorithmes cryptographiques peuvent subir des 'attaques' qui visent à violer la confidentialité de clés utilisées. De nombreux types d'attaques sont aujourd'hui connus.

Ainsi, certaines attaques sont fondées sur des fuites d'information détectées lors de l'exécution de l'algorithme de chiffrement. Elles sont généralement basées sur une corrélation entre les fuites d'informations détectées lors du traitement par l'algorithme de chiffrement de la donnée et de la clé ou des clés secrètes utilisées. On connaît ainsi des attaques DPA pour 'Differential Power Analysis' en anglais. Ces dernières requièrent en général une connaissance des données de sortie cryptées. On connaît également des attaques SPA pour 'Simple Power Analysis' basées sur une analyse d'un simple graphe de consommation de puissance comme cela est décrit dans le document 'Smartly analyzing the simplicity and the power of simple power analysis on Smartcards', Rita Mayer-Sommer electrical engineering division ETH Zürich, 2000.

Un algorithme cryptographique comprend de manière générale plusieurs opérations linéaires et/ou non linéaires. Pour une donnée initiale à crypter, on obtient une donnée intermédiaire en cours de cryptage après chacune des opérations de l'algorithme.

Ainsi, un algorithme de type DES pour 'Data Encryption Standard' ou encore l'algorithme AES pour 'Advanced Encryption Standard' comprend des opérations non linéaires. Les attaques DPA et SPA s'avèrent être particulièrement pertinentes contre l'algorithme AES lors de l'exécution des opérations non linéaires.

Plusieurs procédés de protection d'algorithmes cryptographiques de ce type ont déjà été proposés, notamment par masquage des données en cours de cryptage manipulées dans l'algorithme AES. Les opérations non linéaires sont généralement implémentées sous forme de tables de substitution. Ainsi, une opération non linéaire correspondant à une table de substitution tab[i], appliquée à une donnée x peut s'écrire sous la forme suivante :

$$y = tab[x].$$

Il est parfois complexe de masquer une donnée au cours d'une opération non linéaire avec un masque de valeur aléatoire.

Le document FR 2 831 739 A décrit un procédé de protection d'un calcul de chiffrement selon l'algorithme DES contre des attaques DPA ou SPA. Ce document propose d'ajouter à l'opération réalisée avec la clé secrète une ou plusieurs opérations réalisées avec des clés factices. Les clés peuvent être différentes ou identiques entre elles.

Le document DE 102 23 175 A décrit un procédé similaire en proposant une seule clé factice.

La présente invention vise à proposer une méthode facile à implémenter pour protéger efficacement des exécutions de calculs des algorithmes cryptographiques basés sur au moins une clé secrète contre des attaques DPA ou encore SPA.

Un premier aspect de l'invention propose un procédé d'exécution d'un calcul cryptographique dans un composant électronique, selon un algorithme cryptographique déterminé incluant au moins une opération à clé secrète à réaliser avec une clé cryptographique secrète comprenant m de blocs de clé cryptographique secrète de n bits sur un bloc de données, où m et n sont des nombres entiers positifs. Le procédé comprend, pour un bloc de clé cryptographique secrète donné, les étapes suivantes consistant à :

- déterminer $2^n - 1$ clés secrètes secondaires différentes sur n bits, chacune étant différente dudit bloc de clé cryptographique secrète ;
- réaliser ladite opération à clé secrète avec ledit bloc de clé cryptographique secrète et avec lesdites clés secrètes secondaires sur un bloc de données et obtenir respectivement un bloc de données en cours de cryptage et $2^n - 1$ blocs de données secondaires;
- réaliser ladite opération non linéaire sur ledit bloc de données en cours de cryptage et sur lesdits blocs de données secondaires ;
- fournir un bloc de données crypté à partir du bloc de données en cours de cryptage.

On note que les clés secrètes secondaires sont des clés factices.

Grâce à ces dispositions, on génère, outre les fuites d'information liées aux calculs cryptographiques exécutés sur un bloc de données en cours de cryptage, des fuites d'information liées aux calculs cryptographiques exécutés sur un bloc de données secondaire. Une analyse de telles fuites d'information est de ce fait plus complexe et prend donc plus de temps que l'analyse de fuites d'information lors de l'exécution de calculs cryptographiques sur le bloc de données en cours de cryptage uniquement. On protège ainsi la confidentialité des clés cryptographiques secrètes. La complexité d'une attaque d'un tel algorithme augmente avec le nombre de fois où l'on réalise l'opération 102 à clé secrète avec une clé secrète secondaire factice différente.

Un tel procédé vise à faire apparaître des biais de corrélation pour rendre les attaques SPA ou DPA plus longues voire impossibles.

Ainsi, dans un mode de réalisation de la présente invention, afin de garantir une meilleure confidentialité de l'algorithme, pour un bloc de clé cryptographique secrète, on détermine toutes les valeurs possibles de clés sur n bits, c'est-à-dire $2^n$ valeurs, ou encore $2^n-1$ clés secrètes secondaires factices sur n bits différentes du bloc de clé cryptographique secrète. Puis, on réalise l'opération à clé secrète avec la clé cryptographique secrète et également toutes ces clés secrètes secondaires déterminées. On obtient alors un bloc de données en cours de cryptage et $2^n-1$ blocs de données secondaires sur lesquels on réalise l'opération non linéaire. Dans ce cas, les clés cryptographiques secrètes ne sont pas détectables.

Dans un mode de réalisation de l'invention, le procédé comprend, pour un bloc de clé cryptographique secrète, les étapes consistant à:

- déterminer et arranger aléatoirement les clés secrètes secondaires dans une table initiale comprenant ledit bloc de clé cryptographique secrète;
- stocker en mémoire l'adresse correspondant audit bloc de clé cryptographique secrète dans la table initiale;
- appliquer l'opération à clé secrète au bloc de données avec les clés de la table initiale et obtenir une première table transformée de $2^n$ premiers éléments, chaque premier élément correspondant au résultat de l'opération à clé secrète appliquée au bloc de données avec la clé située dans la table. initiale à la même adresse que ledit premier élément;
- appliquer ladite opération non linéaire aux éléments de ladite première table transformée et obtenir une seconde table transformée de $2^n$ seconds éléments, chaque second élément correspondant au résultat de l'opération non linéaire appliquée au premier élément situé à la même adresse dans la première table transformée que ledit second élément;
- récupérer, dans la seconde table transformée, l'élément correspondant au bloc de données en cours de cryptage situé à l'adresse dudit bloc de clé cryptographique secrète.

La table initiale comprend avantageusement toutes les valeurs de clé possibles.

Grâce à ces dispositions, on manipule de manière équiprobable toutes les clés possibles quand on exécute l'opération à clé secrète et l'opération non linéaire. Un tel procédé garantit une très grande protection de la confidentialité de l'algorithme quant aux attaques DPA et SPA.

On peut récupérer l'élément correspondant au bloc de données en cours de cryptage dans la seconde table transformée via une fonction SPA résistante prenant en paramètre l'adresse du bloc de clé cryptographique secrète donné. On entend par "fonction résistante contre les attaques de type SPA' une fonction pour laquelle il n'est pas possible de déterminer une clé secrète en une seule trace de fuite. En considérant que le signal de fuite W, correspondant à un courant, ou encore à un champ électromagnétique, lors d'une manipulation d'un octet a pour un calcul de l'algorithme, est de la forme suivante :

$$\cdot W(\alpha)=H(\alpha)+b \; ;$$

où $H(\alpha)$ est le modèle de fuite et b le bruit extrinsèque et intrinsèque.

On considère qu'une fonction exécutée sur l'octet $\alpha$ est une fonction résistante contre les attaques SPA lorsqu'on a l'équation suivante :

$$\left|W_\alpha - W_{\alpha'}\right| \le b \, ,$$

où $\alpha'$ est un autre octet.

Lorsque l'algorithme cryptographique comprend un nombre déterminé de tours, chacun incluant au moins une opération à clé cryptographique secrète précédant une opération non linéaire réalisée via une table de substitution, on peut réaliser les étapes du procédé énoncées ci-dessus pour au moins le premier tour et au moins le dernier tour de l'algorithme cryptographique.

En effet, les premiers et derniers tours de l'algorithme AES sont les plus fragiles face aux attaques de type SPA et DPA. Ainsi, en appliquant le procédé selon un mode de réalisation de la présente invention au premier tour et au dernier tour, on protège la confidentialité de l'algorithme tout en limitant le nombre de calculs à ajouter pour la protection de cet algorithme.

L'étape d'arrangement aléatoire des clés dans la table peut être fait à chaque début de l'algorithme cryptographique.

Par ailleurs, on peut réaliser simultanément l'opération à clé secrète avec un bloc de clé cryptographique secrète et avec la clé secrète secondaire et/ou on peut réaliser simultanément l'opération non linéaire sur le bloc de données et les blocs de données secondaires afin de fournir de bonne performance quant à l'exécution des calculs de l'algorithme.

Dans un mode de réalisation de la présente invention, l'algorithme cryptographique est l'AES.

Dans un mode de réalisation de la présente invention, l'une au moins des opérations de l'algorithme cryptographique est réalisée sur le bloc de données en cours de cryptage masqué avec une valeur aléatoire. De préférence, les opérations de l'algorithme autres que celles réalisées avec les clés secrètes secondaires et celles réalisées sur des blocs de données secondaires, sont réalisées sur un bloc de données en cours de cryptage qui est masqué

Un autre aspect de l'invention propose un composant électronique adapté pour exécuter un calcul cryptographique selon un algorithme cryptographique déterminé incluant au moins une opération à clé secrète à réaliser avec une clé cryptographique secrète comprenant m blocs de clé secrète de n bits sur un bloc de données et une opération non linéaire, comprenant des moyens agencés pour mettre en oeuvre un procédé comme énoncé ci-dessus.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre un procédé de calcul cryptographique selon un mode de réalisation de la présente invention ;
- la figure 2 illustre les principales étapes d'un algorithme de type AES ;
- la figure 3 illustre une opération à clé secrète selon un mode de réalisation de l'invention ;
- la figure 4 illustre l'exécution d'une opération non linéaire selon un mode de réalisation de la présente invention ;
- la figure 5 illustre une gestion du passage au premier tour d'un algorithme de type AES comprenant des calculs cryptographiques exécutés selon un mode de réalisation de la présente invention ;
- la figure 6 illustre une gestion du passage entre deux tours consécutifs d'un algorithme de type AES comprenant des calculs cryptographiques exécutés selon un mode de réalisation de la présente invention.

Généralement, un algorithme cryptographique comprend plusieurs opérations qui sont appliquées successivement à un bloc de données, chacune étant appliquée au bloc de données transformé par l'opération précédente. En sortie de l'algorithme, un bloc de données en cours de cryptage est un bloc de données crypté.

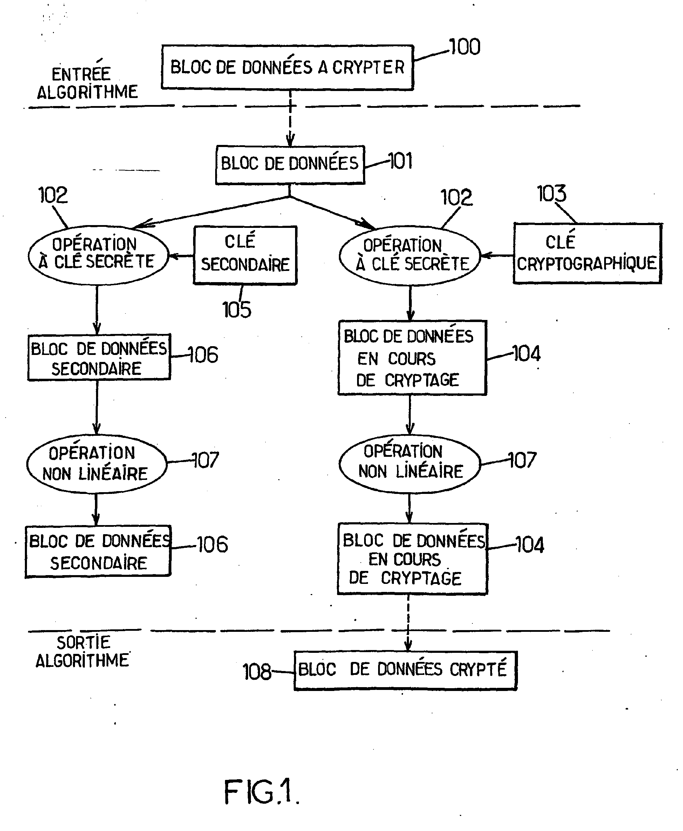

La figure 1 illustre un procédé d'exécution d'un calcul cryptographique selon un algorithme cryptographique, selon un mode de réalisation de la présente invention. Un tel algorithme inclut au moins une opération à clé secrète 102 à réaliser avec une clé cryptographique secrète 103 sur un bloc de données 101 pour obtenir un bloc de données en cours de cryptage 104. L'algorithme inclut également une opération non linéaire 107 à réaliser sur le bloc de données en cours de cryptage 104 pour obtenir un autre bloc de données en cours de cryptage 104. Le bloc de données 101 peut être le résultat d'une opération précédente dans le cas où une ou plusieurs opérations précèdent l'opération à clé secrète 102. Dans le cas où l'opération à clé secrète 102 est la première opération de l'algorithme, il peut correspondre au bloc de données à crypter 100, reçu en entrée de l'algorithme.

A titre d'exemple, dans le cas où l'opération à clé secrète est réalisée avec une clé cryptographique secrète de 128 bits comprenant 16 blocs de clé cryptographique secrète d'un octet chacun, l'opération à clé secrète 102 est réalisée 16 fois sur un bloc de données d'un octet, une fois avec chacun des blocs de clé cryptographique secrète. Après avoir déterminé une valeur de clé secrète secondaire 105 différente de la valeur du bloc de clé cryptographique secrète 103 correspondant, on réalise l'opération 102 avec la clé secrète secondaire 105 déterminée sur le bloc de données 101 pour obtenir un bloc de données secondaire 106. Puis, on applique sur ce bloc de données secondaire, l'opération non linéaire 107 pour obtenir un autre bloc de données secondaire 106.

En sortie de l'algorithme cryptographique on obtient un bloc de données crypté 108.

L'invention couvre toutes les implémentations possibles, c'est-à-dire les cas où on réalise l'opération avec une clé secrète secondaire avant, simultanément ou après l'opération avec les blocs de clé cryptographique secrète.

Etant donné que les opérations non linéaires sont les plus fragiles face aux attaques de type DPA ou SPA, elles sont protégées en priorité. Ainsi, lorsque l'algorithme cryptographique comprend des opérations linéaires après l'opération non linéaire 107, il est préférable de réaliser ces opérations uniquement sur le bloc de données en cours de cryptage 104 afin de limiter le nombre de calculs à exécuter.

La présente invention est décrite ci-après dans son application non limitative à un algorithme de type AES et plus particulièrement à un algorithme AES manipulant des clés de 16 octets.

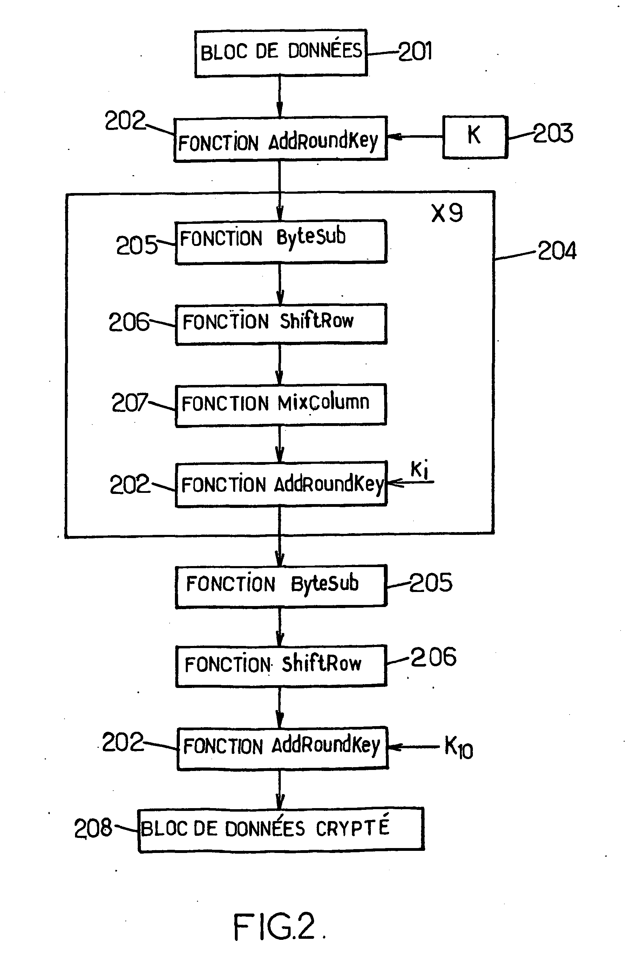

La figure 2 illustre un procédé de cryptographie selon un algorithme de type AES. Un tel algorithme prend en entrée un bloc de données initial à crypter 201 pour fournir en sortie un bloc de données crypté correspondant 208.

L'algorithme comprend plusieurs tours (ou 'round' en anglais). Il est en général basé sur une clé secrète principale K. Une clé principale peut avoir une taille de 128 bits, de 192 bits ou encore de 256 bits. Une telle clé est classiquement dérivée en une pluralité de clés, notées $K_i$. Les clés dérivées ont une taille de 16 octets pour un algorithme manipulant des clés de 128 bits, une taille de 24 octets pour un algorithme manipulant des clés de 192 bits et une taille de 32 octets pour un algorithme manipulant des clés de 256 bits.

On considère à titre d'exemple que la clé secrète principale K est de taille 128 bits et est dérivée en 10 clés de 16 octets, chacune de ces clés étant utilisées dans un tour spécifique.

Le message initial à crypter a une taille de 128 bits. On le traite généralement par blocs de données initiaux d'un octet 201. A un bloc de données d'un octet pour un tour déterminé de l'algorithme correspond un octet d'une clé.

On représente classiquement le message à crypter sous la forme d'une matrice d'état 4x4 de 16 blocs de données initiaux de 8 bits. Les blocs de données de 8 bits peuvent être traités les un après les autres ou encore simultanément. L'invention couvre toutes ces implémentations.

Ce message à crypter est en premier lieu transformé par une opération 202 à clé cryptographique secrète, classiquement référencée 'AddRoundKey'. Cette opération 202 ajoute au bloc de données initial 201 par un ou exclusif la clé principale K 203.

La clé secrète principale K 203 est utilisée lors de la première application de l'opération 202 pour obtenir un bloc de données en cours de cryptage. Puis le bloc de données entre dans un premier tour 204. Pour une clé de 128 bits, un tel algorithme comprend classiquement 9 tours 204 comprenant chacun les mêmes opérations successives suivantes :

- une opération 205, classiquement référencée 'ByteSub' ; cette dernière est un fonction non linéaire généralement implémentée sous forme d'une table de substitution ;
- une opération 206, classiquement référencée 'ShiftRow' ; cette dernière est une fonction opérant des décalages de lignes sur la matrice d'état;
- une opération 207, classiquement référencée 'Mix-Column', cette dernière est une fonction de brouillage de colonnes sur la matrice d'état; et
- l'opération 202 'AddRoundKey' avec la clé $K_r$ correspondante au tour $T_r$.

Puis, sur le bloc de données en cours de cryptage ainsi obtenu à l'issue des 9 tours, on applique à nouveau l'opération 205 'ByteSub', l'opération 206 'ShiftRow', et enfin l'opération 202 'AddRoundKey' avec la clé $K_{10}$.

Pour chacun des tours $T_r$, pour r égal 1 à 9, une clé secrète $K_r$ dérivée de la clé secrète principale est utilisée pour l'exécution de l'opération 202 'AddRoundKey'.

On note $K_{i,r}$ la valeur de l'ième octet de la clé au tour $T_r$ de l'AES, où i est compris entre 1 et $L_r$, où r est compris entre 1 et $N_r$ avec $N_r=10$ et $L_r=16$ dans le cas où l'algorithme AES manipule des clés de 128 bits, $N_r=12$ et $L_r=24$ dans le cas où l'algorithme AES manipule des clés de 192 bits et $N_r=16$ et $L_r=32$ dans le cas où l'algorithme AES manipule des clés de 256 bits.

On note M le message d'entrée à crypter par l'algorithme et Mi, pour i égal 1 à 16, les blocs de données initiaux d'un octet correspondants. Ainsi, à chaque bloc de données d'un octet à traiter par l'algorithme, on applique chacun des blocs de clé cryptographique secrète d'un octet de la clé cryptographique secrète.

On réalise l'opération à clé secrète 202 'AddRoundKey' avec un bloc de clé cryptographique secrète pour obtenir un bloc de données en cours de cryptage et également avec les clés secrètes secondaires différentes du bloc de clé cryptographique secrète et différentes entre elles pour obtenir un bloc de données secondaire. Plus le nombre de clés secrètes secondaire est important, plus la confidentialité de la clé cryptographique secrète est complexe et long à violer.

A cet effet, dans un mode de réalisation préféré, on construit de manière aléatoire une table initiale comprenant toutes les valeurs possibles d'un octet. Ainsi, une telle table comprend notamment le bloc de clé cryptographique secrète à appliquer au bloc de données par l'opération 'AddRoundKey' 202.

Une telle table de clés comprend 256 éléments, prenant les valeurs de 1 à 256. Ces valeurs sont rangées dans un ordre aléatoire.

Dans un mode de réalisation préférentiel, cette table est créée à chaque lancement de l'algorithme d'AES.

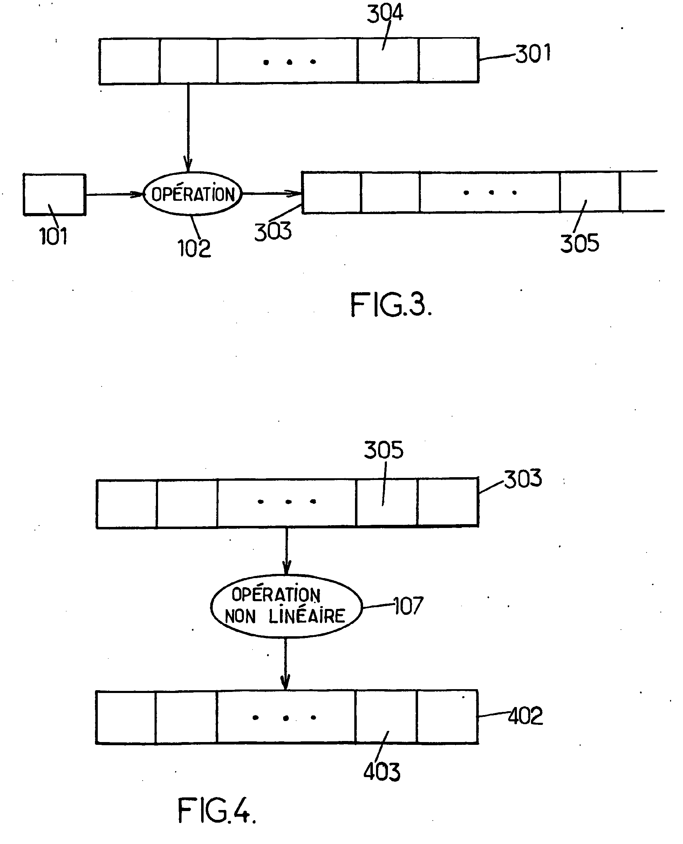

La figure 3 illustre une opération à clé secrète 102 selon un mode de réalisation de l'invention. Une telle opération peut correspondre à l'opération 'AddRound-Key' 202 modifiée selon un mode de réalisation de l'invention.

L'opération 102 est une opération à réaliser avec un bloc de clé cryptographique secrète K 304 écrit sur n bits. Une table 301 comprend des éléments correspondant à toutes les valeurs possibles, soit $2^n$ éléments, rangés aléatoirement. A titre d'exemple, n est égal à 8. Un élément 304 correspond à un bloc de clé cryptographique secrète de l'opération à clé secrète 102. On recherche du bloc de clé cryptographique secrète dans la table 301 de préférence via une fonction résistante contre les attaques SPA. Ce type de fonction de recherche est bien connue de l'homme du métier et n'est pas détaillée dans ce document. De préférence, on stocke alors en mémoire l'adresse du bloc de clé cryptographique secrète.

On applique l'opération 102 à clé secrète au bloc de données 101 avec tous les éléments de la table 301 comprenant les valeurs de clés, soit simultanément, soit séquentiellement. On obtient alors une table 303 transformée qui comprend $2^n$ éléments, soit 256 éléments. Chacun de ces éléments correspond au résultat de l'opération 102 appliquée au bloc de données 101 avec la clé secrète située dans la table 301 à la même adresse que cet élément. Cette table 303 comprend notamment un élément 305 correspondant au bloc de données en cours de cryptage, ce bloc étant le résultat de l'opération à clé secrète 102 appliquée avec le bloc de clé cryptographique secrète 304.

L'opération étant appliquée de façon équiprobable avec toutes les valeurs de clé possible, cette étape est protégée contre toute attaque relative à une analyse des fuites d'information lors de l'exécution du calcul.

Puis, dans un algorithme de type AES, l'opération à clé secrète est suivie de l'opération non linéaire 107 'ByteSub'. Une telle opération peut être source d'informations précieuses lors d'attaques SPA ou DPA. Il est de ce fait très important de protéger son exécution. Ainsi, dans un mode de réalisation préféré de l'invention, on applique une telle opération sur tous les éléments de la table 303.

La figure 4 illustre l'exécution d'une opération non linéaire selon un mode de réalisation de la présente invention. Ainsi, l'opération non linéaire 107 est appliquée soit simultanément, soit séquentiellement, à tous les éléments de la table 303 pour fournir une table 402 qui comprend $2^n$ éléments, soit 256 éléments. Chaque élément correspond au résultat de l'opération non linéaire appliquée sur l'élément de la table 303 situé à la même adresse.

Ainsi, on est en mesure de récupérer le bloc de données en cours de cryptage 403 dès lors que l'on a stocké en mémoire l'adresse du bloc de clé cryptographique secrète dans la table 301 comprenant les clés.

On récupère alors le bloc de données en cours de cryptage 403 dans la table 402, sur la base de l'adresse du bloc de clé cryptographique secrète préalablement stockée en mémoire, de préférence, au moyen d'une fonction résistante contre les attaques SPA.

On peut alors réaliser les opérations 'ShiftRow' 206, 'MlxColumn' 207 uniquement sur le bloc de données en cours de cryptage et non plus sur les blocs de données secondaires, issus d'opérations avec des clés secrètes secondaires et non des blocs de clé cryptographique secrète. Ces dernières opérations sont alors de préférence réalisées en appliquant des masques de valeurs aléatoires au bloc de données en cours de cryptage manipulé.

Dans un algorithme de type AES, toutes ou partie des opérations 202 'AddRoundKey' peuvent être réalisées selon un mode de réalisation de l'invention.

Dans certains cas, on peut souhaiter exécuter une partie seulement des opérations 'AddRoundKey' 202 et 'ByteSub' 205 de l'algorithme selon un mode de réalisation de la présente invention. Dans ce cas, on exécutera selon l'invention, de préférence les opérations 'AddRoundKey' 202 et 'ByteSub' 205 au début de l'algorithme, c'est-à-dire dans au moins le premier tour de l'algorithme, ou en fin d'algorithme, c'est-à-dire dans au moins le dernier tour de l'algorithme.

Afin d'améliorer la protection contre les attaques précédemment décrites, il est avantageux de masquer les blocs de données en cours de cryptage manipulés. Le masquage peut être réalisé aisément en ajoutant une valeur aléatoire par un ou exclusif.

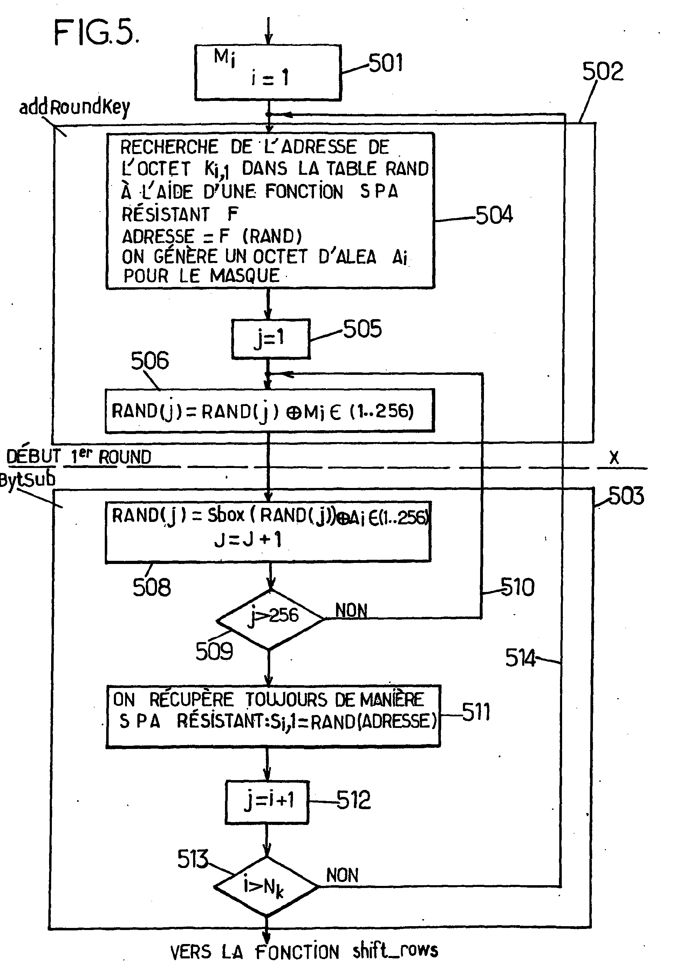

La figure 5 illustre les étapes pour crypter un message de 16 octets selon un algorithme de type AES comprenant des calculs cryptographiques exécutés selon un mode de réalisation de la présente invention, et plus particulièrement le passage au premier tour. Sur cette figure, la table contenant toutes les valeurs de clés est notée RAND[j]. Cette table comprend les valeurs de 1 à 256 aléatoirement rangées. Le message à crypter M est composé de 16 blocs de données d'un octet chacun, $M_I$ pour i égal 1 à 16.

Ainsi, en début d'algorithme, on traite tout d'abord le premier octet $M_1$ 501 du message à crypter M.

Dans l'étape 502, on réalise l'opération 'AddRoundKey' selon un mode de réalisation de l'invention.

Ainsi, en une première étape 504, on recherche tout d'abord le bloc de clé cryptographique secrète $K_{I,1}$ dans la table RAND[j] via une fonction résistante contre les attaques SPA pour obtenir sa position dans cette table et on génère une valeur d'octet aléatoire $A_I$, utilisée pour masquer le bloc de données manipulé. Puis, on exécute une boucle pour j égal à 1 jusqu'à j égal 256, via les étapes 505, 506, 508, afin d'appliquer l'opération 'AddRoundKey' avec toutes les clés de la table RAND[j] suivi de l'exécution de l'opération 'ByteSub'. Lorsque tous les éléments de la table RAND[j] ont été traité, dans l'étape 511 on récupère, via une fonction résistante aux attaques SPA, le bloc de données en cours de cryptage correspondant au résultat des opérations sur le bloc de données $M_1$ avec le bloc de clé cryptographique secrète correspondant.

Ensuite, on incrémente i dans l'étape 512. On réitère ainsi toutes les opérations précédemment décrites sur tous les octets $M_i$ du message à crypter. Puis, on applique sur les blocs de données en cours de cryptage ainsi obtenus les opérations 'SiftRows' et 'MixColumn', ces opérations étant préférablement réalisées de façon masquée.

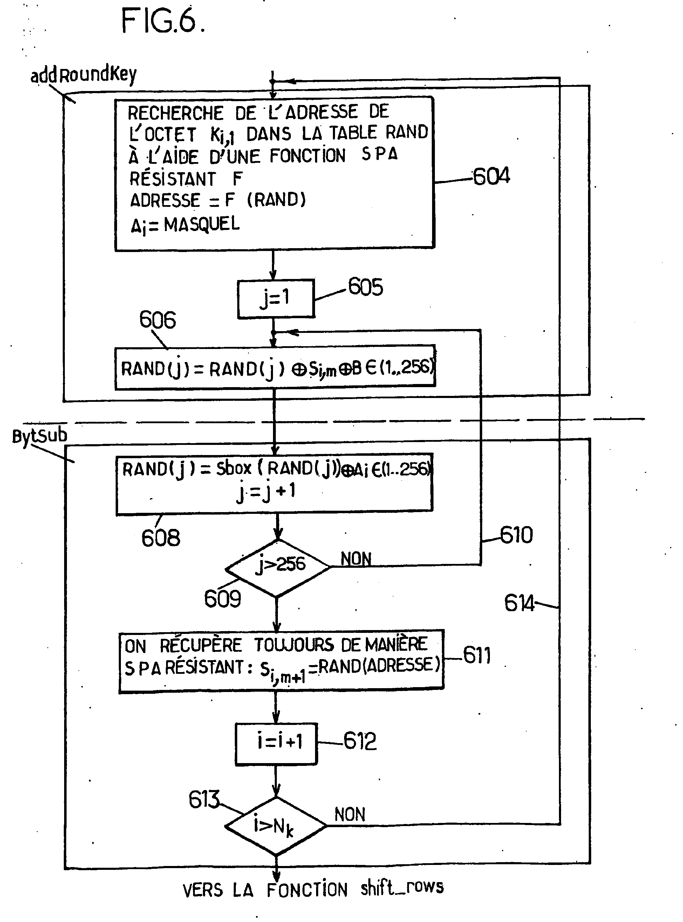

La figure 6 illustre les étapes pour crypter un message de 16 octets selon un algorithme de type AES comprenant des calculs cryptographiques exécutés selon un mode de réalisation de la présente invention et plus particulièrement le passage entre deux tours consécutifs de l'algorithme.

L'étape 602 représente l'opération 'AddRoundKey' exécutée en fin d'un tour de l'algorithme. Les étapes 602 et 603 sont similaires aux étapes de la figure 5 précédemment décrite. On note que dans l'étape 606, on masque le calcul en ajoutant par un ou exclusif un masque B, qui est une valeur aléatoire.

Ainsi, lors d'une attaque sur l'opération non linéaire, on collecte de manière équiprobable l'ensemble des fuites d'information liées à l'opération non linéaire de substitution puisque cette dernière est réalisée sur tous les blocs de données secondaires et le bloc de données en cours de cryptage. De cette manière, lors d'une attaque DPA menée lors de l'exécution de calculs de l'algorithme selon un mode de réalisation de l'invention, on peut détecter 256 biais, 1 biais pour chaque octet de clé. En conséquence toutes les hypothèses de clé sont validées par une attaque de ce type. La confidentialité des clés secrètes est ainsi préservée.

Afin de préserver une bonne performance d'exécution de l'algorithme cryptographique, on peut avantageusement réaliser simultanément et donc parallèlement une partie des calculs exécutés selon l'invention.

**Revendications**

**1.** Procédé d'exécution d'un calcul cryptographique dans un composant électronique, selon un algorithme cryptographique déterminé incluant au moins une opération à clé secrète (102) à réaliser sur un bloc de données (101) avec une clé cryptographique secrète (103) comprenant m blocs de clé cryptographique secrète de n bits et une opération non linéaire (107), ledit procédé comprenant, pour un bloc de clé cryptographique secrète donné, les étapes suivantes consistant à :

- déterminer $2^n-1$ clés secrètes secondaires différentes (105) sur n bits, chacune étant différente dudit bloc de clé cryptographique secrète ;
- réaliser ladite opération à clé secrète (102) avec ledit bloc de clé cryptographique secrète (103) et avec lesdites clés secrètes secondaires sur un bloc de données (101) et obtenir respectivement un bloc de données en cours de cryptage (104) et $2^n-1$ blocs de données secondaire (106);
- réaliser ladite opération non linéaire (107) sur ledit bloc de données en cours de cryptage (104) et sur lesdits blocs de données secondaires (106) ;
- fournir un bloc de données crypté (108) à partir du bloc de données en cours de cryptage.

2. Procédé selon la revendication 1, comprenant, pour un bloc de clé cryptographique secrète, les étapes consistant à:

/a/ déterminer et arranger aléatoirement les clés secrètes secondaires dans une table initiale comprenant ledit bloc de clé cryptographique secrète;
/b/ stocker en mémoire l'adresse correspondant audit bloc de clé cryptographique secrète dans la table initiale;
/c/ appliquer l'opération à clé secrète au bloc de données (101) avec les clés de la table initiale (301) et obtenir une première table transformée (303) de $2^n$ premiers éléments, chaque premier élément correspondant au résultat de l'opération à clé secrète (102) appliquée au bloc de données (101) avec la clé située dans la table initiale à la même adresse que ledit premier élément;
/d/ appliquer ladite opération non linéaire (107) aux éléments de ladite première table transformée (303) et obtenir une seconde table transformée (402) de $2^n$ seconds éléments, chaque second élément correspondant au résultat de l'opération non linéaire (107) appliquée au premier élément situé à la même adresse dans la première table transformée (303) que ledit second élément;
/e/ récupérer, dans la seconde table transformée (402), l'élément correspondant au bloc de données en cours de cryptage (403) situé à l'adresse dudit bloc de clé cryptographique secrète.

3. Procédé selon la revendication 2, suivant lequel on récupère l'élément correspondant au bloc de données en cours de cryptage (403), dans la seconde table transformée, via une fonction résistante contre une attaque de type SPA pour 'Simple Power Analysis' prenant en paramètre l'adresse de la clé cryptographique secrète.

4. Procédé selon la revendication 2 ou 3, suivant lequel l'algorithme cryptographique comprend un nombre déterminé de tours, chacun incluant au moins une opération à clé cryptographique secrète précédant une opération non linéaire;
et suivant lequel on réalise les étapes /a/ à /e/ pour au moins le premier tour et au moins le dernier tour de l'algorithme cryptographique.

5. Procédé selon l'une quelconque des revendications 2 à 4, suivant lequel on réalise l'étape d'arrangement aléatoire au début de l'algorithme cryptographique.

6. Procédé selon l'une quelconque des revendications précédentes, suivant lequel on réalise simultanément l'opération à clé secrète (102) avec un des blocs de clé cryptographique secrète et avec les clés secrètes secondaires et/ou on réalise simultanément l'opération non linéaire sur le bloc de données et les blocs de données secondaires.

7. Procédé selon l'une quelconque des revendications précédentes, suivant lequel l'algorithme cryptographique est l'AES.

8. Procédé selon l'une quelconque des revendications précédentes, suivant lequel l'une au moins des opérations de l'algorithme cryptographique est réalisée sur le bloc de données en cours de cryptage masqué avec une valeur aléatoire.

9. Composant électronique adapté pour exécuter un calcul cryptographique selon un algorithme cryptographique déterminé incluant au moins une opération à clé secrète (102) à réaliser avec une clé cryptographique secrète (103) comprenant m blocs de clé cryptographique secrète de n bits sur un bloc de données (101) et une opération non linéaire (107), comprenant des moyens agencés pour mettre en oeuvre un procédé selon l'une quelconque des revendications précédentes.

**Patentansprüche**

1. Verfahren zur Ausführung einer kryptografischen Berechnung in einem Elektronikbauteil nach einem bestimmten kryptografischen Algorithmus, einschließlich mindestens einer Geheimschlüsseloperation (102), die auf einem Datenblock (101) mit einem kryptografischen Geheimschlüssel (103) durchzuführen ist, umfassend m Blöcke eines kryptografischen Geheimschlüssels zu n Bits, und einer nichtlinearen Operation (107), wobei das Verfahren für einen gegebenen Block eines kryptografischen Geheimschlüssels die folgenden Schritte umfasst, darin bestehend:

- $2^n$-1 unterschiedliche sekundäre Geheimschlüssel (105) auf n Bits zu bestimmen, wobei jeder zu dem Block des kryptografischen Geheimschlüssels unterschiedlich ist;
- die Geheimschlüsseloperation (102) mit dem Block des kryptografischen Geheimschlüssels (103) und mit den sekundären Geheimschlüsseln auf einem Datenblock (101) durchzuführen und einen Datenblock während der Verschlüsselung (104) bzw. $2^n$-1 sekundäre Datenblöcke (106) zu erhalten;
- die nichtlineare Operation (107) auf dem Datenblock während der Verschlüsselung (104) und auf den sekundären Datenblöcken (106) durchzuführen;
- einen verschlüsselten Datenblock (108) aus dem Datenblock während der Verschlüsselung zu liefern.

2. Verfahren nach Anspruch 1, umfassend für einen Block eines kryptografischen Geheimschlüssels die folgenden Schritte, darin bestehend:

/a/ die sekundären Geheimschlüssel zu bestimmen und zufällig in einer Ausgangstabelle, umfassend den Block des kryptografischen Geheimschlüssels, anzuordnen;
/b/ die Adresse entsprechend dem Block des kryptografischen Geheimschlüssels in der Ausgangstabelle zu speichern;
/c/ die Geheimschlüsseloperation am Datenblock (101) mit den Schlüsseln der Ausgangstabelle (301) anzuwenden und eine erste transformierte Tabelle (303) von $2^n$ ersten Elementen zu erhalten, wobei jedes erste Element dem Ergebnis der Geheimschlüsseloperation (102) entspricht, die am Datenblock (101) mit dem Schlüssel, der sich in der Ausgangstabelle an derselben Adresse wie das erste Element befindet, angewandt wurde;
/d/ die nichtlineare Operation (107) an den Elementen der ersten transformierten Tabelle (303) anzuwenden und eine zweite transformierte Tabelle (402) von $2^n$ zweiten Elementen zu erhalten, wobei jedes zweite Element dem Ergebnis der nichtlinearen Operation (107) entspricht, die an dem ersten Element, das sich an derselben Adresse in der ersten transformierten Tabelle (303) wie das zweite Element befindet, angewandt wurde;
/e/ in der zweiten transformierten Tabelle (402) das Element entsprechend dem Datenblock während der Verschlüsselung (403), das sich an der Adresse des Blocks des kryptografischen Geheimschlüssels befindet, wiederzugewinnen.

3. Verfahren nach Anspruch 2, bei dem das Element entsprechend dem Datenblock während der Verschlüsselung (403) in der zweiten transformierten Tabelle über eine Funktion wiedergewonnen wird, die gegenüber einer Attacke des Typs SPA für "Simple Power Analysis", die als Parameter die Adresse des kryptografischen Geheimschlüssels heranzieht, resistent ist.

4. Verfahren nach Anspruch 2 oder 3, bei dem der kryptografische Algorithmus eine bestimmte Anzahl von Runden umfasst, wobei jede mindestens eine kryptografische Geheimschlüsseloperation vor einer nichtlinearen Operation einschließt; und bei dem die Schritte /a/ bis /e/ für mindestens die erste Runde und mindestens die letzte Runde des kryptografischen Algorithmus durchgeführt werden.

5. Verfahren nach einem der Ansprüche 2 bis 4, bei dem der Schritt der zufälligen Anordnung am Anfang des kryptografischen Algorithmus erfolgt.

6. Verfahren nach einem der vorhergehenden Ansprüche, bei dem gleichzeitig die Geheimschlüsseloperation (102) mit einem der Blöcke des kryptografischen Geheimschlüssels und mit den sekundären Geheimschlüsseln durchgeführt wird, und/oder gleichzeitig die nichtlineare Operation am Datenblock und den sekundären Datenblöcken durchgeführt wird.

7. Verfahren nach einem der vorhergehenden Ansprüche, bei dem der kryptografische Algorithmus der AES ist.

8. Verfahren nach einem der vorhergehenden Ansprüche, bei dem mindestens eine der Operationen des kryptografischen Algorithmus auf dem Datenblock während der mit einem zufälligen Wert verdeckten Verschlüsselung durchgeführt wird.

9. Elektronikbauteil, das dazu angepasst ist, eine kryptografische Berechnung nach einem bestimmten kryptografischen Algorithmus auszuführen, einschließlich mindestens einer Geheimschlüsseloperation (102), die mit einem kryptografischen Geheimschlüssel (103) durchzuführen ist, umfassend m Blöcke eines kryptografischen Geheimschlüssels zu n Bits auf einem Datenblock (101), und einer nichtlinearen Operation (107), umfassend Mittel, die vorgesehen sind, ein Verfahren nach einem der vorhergehenden Ansprüche einzusetzen.

## Claims

1. A method of executing a cryptographic calculation in an electronic component, according to a determined cryptographic algorithm including at least one secret-key operation (102) to be carried out on a data block (101) with a secret cryptographic key (103) comprising m secret cryptographic key blocks of n bits and a nonlinear operation (107), said method comprising, for a given secret cryptographic key block, the following steps consisting in:

   - determining $2^n-1$ different secondary secret keys (105) on n bits, each key being different from said secret cryptographic key block;
   - carrying out said secret-key operation (102) with said secret cryptographic key block (103) and with said secondary secret keys on a data block (101) and obtaining respectively a data block being encrypted (104) and $2^n-1$ secondary data blocks (106);
   - carrying out said nonlinear operation (107) on said data block being encrypted (104) and on said secondary data blocks (106);
   - providing an encrypted data block (108) on the basis of the data block being encrypted.

2. The method as claimed in claim 1, comprising, for a secret cryptographic key block, the steps consisting in:

   /a/ determining and arranging the secondary secret keys randomly in an initial table comprising said secret cryptographic key block;
   /b/ storing in memory the address corresponding to said secret cryptographic key block in the initial table;
   /c/ applying the secret-key operation to the data block (101) with the keys of the initial table (301) and obtaining a first transformed table (303) of $2^n$ first elements, each first element corresponding to the result of the secret-key operation (102) applied to the data block (101) with the key situated in the initial table at the same address as said first element;
   /d/ applying said nonlinear operation (107) to the elements of said first transformed table (303) and obtaining a second transformed table (402) of $2^n$ second elements, each second element corresponding to the result of the nonlinear operation (107) applied to the first element situated at the same address in the first transformed table (303) as said second element;
   /e/ retrieving, from the second transformed table (402), the element corresponding to the data block being encrypted (403) situated at the address of said secret cryptographic key block.

3. The method as claimed in claim 2, according to which the element corresponding to the data block being encrypted (403) is retrieved from the second transformed table via a function resistant to an attack of SPA type ("Simple Power Analysis") taking as parameter the address of the secret cryptographic key.

4. The method as claimed in claim 2 or 3, according to which the cryptographic algorithm comprises a determined number of rounds, each including at least one secret cryptographic-key operation preceding a nonlinear operation;
   and according to which steps /a/ to /e/ are carried out for at least the first round and at least the last round of the cryptographic algorithm.

5. The method as claimed in any one of claims 2 to 4, according to which the step of random arranging is carried out at the start of the cryptographic algorithm.

6. The method as claimed in any one of the preceding claims, according to which the secret-key operation (102) is carried out simultaneously with one of the secret cryptographic key blocks and with the secondary secret keys, and/or the nonlinear operation is carried out simultaneously on the data block and the secondary data blocks.

7. The method as claimed in any one of the preceding claims, according to which the cryptographic algorithm is the AES.

8. The method as claimed in any one of the preceding claims, according to which one at least of the operations of the cryptographic algorithm is carried out on the data block being encrypted masked with a random value.

9. An electronic component adapted for executing a cryptographic calculation according to a determined cryptographic algorithm including at least one secret-key operation (102) to be carried out with a secret cryptographic key (103) comprising m secret cryptographic key blocks of n bits on a data block (101) and a nonlinear operation (107), comprising means arranged for implementing a method as claimed in any one of the preceding claims.

ENTRÉE
ALGORITHME

BLOC DE DONNÉES A CRYPTER —100

BLOC DE DONNÉES —101

102

OPÉRATION
À CLÉ SECRÈTE

CLÉ
SECONDAIRE

OPÉRATION
À CLÉ SECRÈTE

102

CLÉ
CRYPTOGRAPHIQUE

103

105

BLOC DE DONNÉES
SECONDAIRE —106

BLOC DE DONNÉES
EN COURS
DE CRYPTAGE —104

OPÉRATION
NON LINÉAIRE —107

OPÉRATION
NON LINÉAIRE —107

BLOC DE DONNÉES
SECONDAIRE —106

BLOC DE DONNÉES
EN COURS
DE CRYPTAGE —104

SORTIE
ALGORITHME

108— BLOC DE DONNÉES CRYPTÉ

FIG.1.

BLOC DE DONNÉES —201

202— FONCTION AddRoundKey ◄— K —203

X9

205— FONCTION ByteSub —204

206— FONCTION ShiftRow

207— FONCTION MixColumn

202— FONCTION AddRoundKey ◄— $K_i$

FONCTION ByteSub —205

FONCTION ShiftRow —206

202— FONCTION AddRoundKey ◄— $K_{10}$

208— BLOC DE DONNÉES CRYPTÉ

FIG.2.

FIG.3.

FIG.4.

# FIG.5.

addRoundKey

```
        M_i
         i = 1                    501
```

502

RECHERCHE DE L'ADRESSE DE
L'OCTET $K_{i,1}$ DANS LA TABLE RAND
À L'AIDE D'UNE FONCTION SPA
RÉSISTANT F
ADRESSE = F (RAND)
ON GÉNÈRE UN OCTET D'ALEA $A_i$
POUR LE MASQUE

504

j=1          505

506

RAND(j) = RAND(j) ⊕ $M_i$ ∈ (1..256)

DÉBUT 1er ROUND ————————————————— X —

BytSub

503

RAND(j) = Sbox ( RAND(j))⊕$A_i$ ∈(1..256)
J = J + 1

508

j>256    NON

509

510

514

ON RÉCUPÈRE TOUJOURS DE MANIÈRE
SPA RÉSISTANT: $S_{i,1}$ = RAND(ADRESSE)          511

j = i+1    512

513    i>$N_k$    NON

VERS LA FONCTION shift_rows

EP 1 769 603 B1

# FIG.6.

addRoundKey

RECHERCHE DE L'ADRESSE DE
L'OCTET $K_{i,1}$ DANS LA TABLE RAND
À L'AIDE D'UNE FONCTION S P A
RÉSISTANT F
ADRESSE = F (RAND)
$A_i$ = MASQUEL                                    —604

$j=1$  —605

606

RAND($j$) = RAND($j$) $\oplus S_{i,m} \oplus B \in (1..256)$

— — — — — — — — — — — — — — — —

BytSub

RAND($j$) = Sbox ( RAND($j$))$\oplus A_i \in (1..256)$
$j = j + 1$

608

$j>256$   NON         —610

609

614—

ON RÉCUPÈRE TOUJOURS DE MANIÈRE
S P A RÉSISTANT : $S_{i,m+1}$ =RAND(ADRESSE)  —611

$i=i+1$  —612

613—  $i>N_k$   NON

VERS LA FONCTION shift_rows

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2831739 A

- DE 10223175 A

**Littérature non-brevet citée dans la description**

- **RITA MAYER.** Smartly analyzing the simplicity and the power of simple power analysis on Smartcards. *Sommer electrical engineering division,* 2000